# EUROPEAN PATENT SPECIFICATION

(11) **EP 0 739 360 B1**
(45) Date of publication and mention of the grant of the patent: **11.04.2001**
(21) Application number: 94927237.1
(22) Date of filing: 29.08.1994
(51) Int. Cl.: C08F 4/02, C08F 4/605

(54) **POLYMERIZATION CATALYST SYSTEMS, THEIR PRODUCTION AND USE**
POLYMERISATIONS KATALYSATOR SYSTEME, IHRE HERSTELLUNG UND VERWENDUNG
SYSTEMES CATALYSEURS DE POLYMERISATION, LEUR PRODUCTION ET UTILISATION

(30) Priority: 17.09.1993 US 122213; 20.12.1993 US 170108; 14.01.1994 US 182244
(43) Date of publication of application: 30.10.1996
(73) Proprietor: EXXON CHEMICAL PATENTS INC., Baytown, TX 77520-2149 (US)
(72) Inventor: JEJELOWO, Moses, Olukayode, Kingwood, TX 77345 (US); BAMBERGER, Robert, Lee, Crosby, TX 77532 (US); SAGAR, Vispi, Ruston, League City, TX 77573 (US)
(74) Representative: Dew, Melvyn John
(86) International application number: US9409629
(87) International publication number: WO9507939

(56) References cited:
- EP-A- 0 545 152
- EP-B- 0 285 443
- WO-A-91/09882
- US-A- 5 032 562

## Description

### FIELD OF THE INVENTION

This invention relates to catalysts, catalyst systems and to methods for their production and use in olefin polymerization. The invention particularly relates to a process for preparing a supported bulky ligand transition metal compound for use in the gas phase, slurry phase or liquid/solution phase with improved reactor operability.

### BACKGROUND OF THE INVENTION

It is desirable in many polymerization processes, particularly a gas phase process, to use a supported catalyst. Generally, these catalyst systems include a metallocene and alumoxane supported on the same carrier, such as silica, and subsequently dried to a powder. For example, U.S. Patent No. 4,937,217 (EP 367503-A) generally describes a mixture of trimethylaluminum and triethylaluminum added to an undehydrated silica, then adding a metallocene to form a dry catalyst. EP-308177-B1 generally describes adding a wet monomer to a reactor containing a metallocene, trialkylaluminum and undehydrated silica. U.S. Patent Nos. 4,912,075 (EP 323716-A), 4,935,937 and 4,937,301 (EP 323716-A) generally relate to adding trimethylaluminurn to an undehydrated silica and then adding a metallocene to form a dry supported catalyst. Similarly, U.S. Patent Nos. 5,008,228, 5,086,025 and 5,147,949 (EP 336593-A) generally describe forming a dry supported catalyst by the addition of trimethylaluminum to a water impregnated silica then adding the metallocene. U.S. Patent No. 4,914,253 (EP 367597-A) describes adding trimethylaluminum to undehydrated silica, adding a metallocene and then drying the catalyst with an amount of hydrogen to produce a polyethylene wax. U.S. Patent Nos. 4,808,561, 4,897,455 (EP 206794-A) and 4,701,432 (EP 232595-A) describe techniques to form a supported catalyst where the inert carrier, typically silica, is calcined and contacted with a metallocene(s) and a activator/cocatalyst component. U.S. Patent No. 5,238,892 (EP 646137-A) describes forming a dry supported catalyst by mixing a metallocene with an alkyl aluminum then adding undehydrated silica. U.S. Patent No. 5,240,894 (EP 642536-A) generally pertains to forming a supported metallocene/alumoxane catalyst system by forming a metallocene/alumoxane reaction solution, adding a porous carrier, evaporating the resulting slurry to remove residual solvent from the carrier.

US-A-5 032 562 discloses a method for producing a supported catalyst system comprising contacting a porous carrier which has active OH groups with a magnesium compound, further with a metallocene of zirconium and an alumoxane activator, this document does not mention hydrolysis of the activator at least once after its initial formation.

During polymerization within a reactor, particularly a gas phase polymerization process, there is a tendency for reactor fouling. Typically, in such a process, a continuous cycle is employed where in one part of the cycle, a recycle stream is heated in the reactor by the heat of polymerization. This heat is removed in another part of the cycle by a cooling system external to the reactor. During a typical polymerization process fines within the reactor often accumulate and cling or stick to the walls of a reactor. This phenomenon is often referred to as "sheeting" or "fouling". The accumulation of polymer particles on the reactor walls, the recycling lines and cooling system can cause many problems, including poor heat transfer in the polymerization process. Polymer particles that adhere to the walls of the reactor continue to polymerize and often fuse together and form chunks, which can be detrimental to a continuous process, particularly a fluidized bed process.

It would be highly desirable to have a polymerization catalyst with increased activity and with a reduced tendency toward sheeting and other agglomerations in a polymerization process. Thus, it would be desirable to have a polymerization catalyst that results in a significant enhancement in reactor operability and productivity.

### SUMMARY OF THE INVENTION

This invention is generally directed towards a new polymerization catalyst system, having increased activity than achievable with support procedures in the past. to methods for its manufacture and to its use in a polymerization process.

In one embodiment a method is provided to produce a supported catalyst system by contacting a porous carrier with an organometallic compound then adding at least one metallocene component followed by an activator. The activator of the invention is hydrolyzed at least once after its initial formation.

In another embodiment of the invention, there is provided a process for producing polyolefins by contacting olefin monomer, optionally with comonomer in the presence of the catalyst system described above.

### DETAILED DESCRIPTION OF THE INVENTION

### Introduction

This invention is generally directed toward a supported catalyst system useful for polymerizing olefins. The method for forming the catalyst system of the invention involves supporting a bulky ligand transition metal compound on a carrier followed by the addition of a cocatalyst or activator for the bulky compound. The catalyst system of this embodiment typically has increased activity and provides for a polymerization process having improved reactor operability.

For the purpose of this patent specification the phrase "hydrolyzing", "hydrolysis", and "hydrolyze" means that the activator or cocatalyst once formed by hydrolyzation or otherwise is subjected to hydrolysis before use in the catalyst system of this invention. Hydrolyzing the already formed cocatalyst or activator at least once results in a supported catalyst system with reduced tendency for sheeting or fouling a polymerization reactor. The catalyst system of this embodiment results in a polymer product having improved physical properties, and in some instances with a substantial reduction in multiple melting peaks.

The catalyst system of the invention may provide for a polymer having a broader molecular weight distribution, increased activity and higher molecular weights.

### Catalyst Systems and Methods for Their Production

The catalyst is a Group 4, 5 or 6 transition metal compound. The metallocene has a cyclopentadienyl ligand or cyclopentadienyl derived ligand which can be mono- or poly-nuclear forming a bulky ligand. One or more ligands may be π-bonded to the transition metal atom. Other ligands may be bonded to the transition metal, preferably detachable by a cocatalyst such as a hydrocarbyl or halogen leaving group. The catalyst is derivable from a compound of the formula

[L]ₘM[X]ₙ

wherein L is the bulky ligand; X is the leaving group, M is the transition metal and m and n are such that the total ligand valency corresponds to the transition metal valency. Preferably the catalyst is four co-ordinate such that the compound is ionizable to a 1⁺ valency state.

The ligands L and X may be bridged to each other and if two ligands L and/or X are present, they may be bridged. The bulky ligand compounds, for example a metallocene, may be full-sandwich compounds having two ligands L which may be cyclopentadienyl ligands or cyclopentadiene derived ligands or half-sandwich compounds having one ligand L, which is a cyclopentadienyl ligand or derived ligand.

For the purposes of this patent specification the term "metallocene" is defined to contain one or more cyclopentadienyl moiety in combination with a transition metal. In one embodiment the merallocene catalyst component is represented by the general formula (Cₚ)ₘMRₙR'ₚ wherein Cₚ is a substituted or unsubstituted cyclopentadienyl ring; M is a Group 4, 5 or 6 transition metal; R and R' are independently selected halogen, hydrocarbyl group, or hydrocarboxyl groups having 1-20 carbon atoms; m = 1-3, n = 0-3, p = 0-3, and the sum of m + n + p equals the oxidation state of Me.

In another embodiment the metallocene catalyst component is represented by the formulas:

(C₅R'ₘ)ₚR"ₛ(C₅R'ₘ)MQ₃₋ₚ₋ₓ

and

R"ₛ(C₅R'ₘ)₂MQ'

wherein M is a Group 4, 5, 6 transition metal, C₅R'ₘ is a substituted cyclopentadienyl, each R', which can be the same or different is hydrogen, alkyl, alkenyl, aryl, alkylaryl or arylalkyl radical having from 1 to 20 carbon atoms or two carbon atoms joined together to form a part of a C₄ to C₂₀ ring, R" is one or more of or a combination of a carbon, a germanium, a silicon, a phosphorus or a nitrogen atom containing radical substituting on and bridging two (C₅R'ₘ) rings, or bridging one (C₅R'm) ring back to M, when p = 0 and x = 1 otherwise "x" is always equal to 0, each Q which can be the same or different is an aryl, alkyl, alkenyl, alkylaryl, or arylalkyl radical having from 1 to 20 carbon atoms or halogen, Q' is an alkylidene radical having from 1-20 carbon atoms, s is 0 or 1 and when s is 0, m is 5 and p is 0, 1 or 2 and when s is 1, m is 4 and p is 1.

Various forms of the catalyst system of the metallocertc type may be used in the polymerization process of this invention. Exemplary of the development of metallocene catalysts in the art for the polymerization of ethylene is the disclosure of U.S. Patent No. 4,871,705, 4,937,299, 5,017,714, 5,120,867, and 5,324,800 and EP-A-0 129 368, These publications teach the structure of the metallocene catalysts and include alumoxane as the cocatalyst. None of these references disclose the catalyst system of this invention. There are a variety of methods for preparing alumoxane one of which is described in U.S. Patent 4,665,208.

Further, the metallocene catalyst component can be a monocyclopentadienyl heteroatom containing compound. This hetcroatom is activated by either an alumoxanc or an alumoxanc and an ionic activator to form an active polymerization catalyst system to produce polymers useful in this present invention. These types of catalyst systems are described in, for example, WO 92/00333, U.S. Patent Nos. 5,057,475, 5,096,867, 5,055,438 and 5,227,440 and EP-A-0 420 436, WO 91/ 04257. In addition, the metallocene catalysts useful in this invention can include non-cyclopentadienyl catalyst components, or ancillary ligands such as boroles or carbollides in combination with a transition metal. Additionally it is not beyond the scope of this invention that the catalysts and catalyst systems may be those described in U.S. Patent No. 5,064,802 and WO 93/08221 and WO 93/08199. The preferred transition metal components of the catalyst of the invention are those of Group 4, particularly, zirconium, titanium and hafnium. The transition metal may be in any oxidation state, preferably +3 or +4 or a mixture thereof. All the catalyst systems of the invention may be, optionally, prepolymerized or used in conjunction with an additive or scavenging component to enhance catalytic productivity.

For the purposes of this patent specification, the terms "cocatalysts" and "activators" are used interchangeably and arc defined to be any compound or component which can activate a bulky ligand transition metal compound such as a metallocene, as defined above. In one embodiment the activators generally contain a metal of Group II and III. In the preferred embodiment the bulky transition metal compounds are metallocenes, which are activated by trialkylaluminum compounds or alumoxanes or mixtures thereof. In one aspect the invention provides a method to produce a supported catalyst system comprising the steps of:
a) contacting a porous carrier having surface active sites with labile protons comprising silica with an organometallic compound of an aluminum alkyl, lithium alkyl, silicon alkyl, silicon alkoxidc or silicon alkylhalide,
b) adding at least one mctalloccne of Group 4, 5 or 6, and
c) adding an alumoxane activator for said metallocene.
wherein the mole ratio of the compound to the surface active site of said carrier is less than one equal to 2.5:1.

It is not beyond the scope of this invention to in addition to using the above activators to use an ionizing ionic activator such as tri (n-butyl) ammonium tetra (pentafluorophenyl) boron, which ionize the neutral metallocene compound. Such ionizing compounds may contain an active proton, or some other cation associated with but not coordinated or only loosely coordinated to the remaining ion of the ionizing ionic compound. Such compounds are described in EP-A-0520 732, EP-A-0 277 003 and EP-A-0 277 004 published August 3, 1988, and U.S. Patent Nos. 5,153,157, 5,198,401 and 5,241,025.

In one preferred embodiment the activator of the invention is an oxy containing organometallic compound. In a more preferred embodiment the organometallic compound can be represented by the following formula:

(R-Al-O)ₙ

which is a cyclic compound and

R (R-Al-O)ₙAlR₂

which is a linear or non-cyclic compound and mixtures thereof including multidimensional structures. In the general formula R is a C₁ to C₁₂ alkyl group such as for example methyl, ethyl, propyl, butyl, pentyl, hexyl, octyl, nonyl and n is an integer from 1 to 20. The most preferred oxy containing organometallic compounds are alumoxanes, for example methyl alumoxane and/or ethylalumoxane. It is known in the art to make alumoxanes, see for example U.S. Patent Nos. 4,530,914 and 4,952,716.

The organometallic compounds useful for making the activator or as activators are those compounds of Group 1, 2, 3 and 4 organometallic alkyls, alkoxides, and halides. The preferred organometallic compounds are lithium alkyls, magnesium alkyls, magnesium alkyl halides, aluminum alkyls, silicon alkyl, silicon alkoxides and silicon alkyl halides. The more preferred organometallic compounds are aluminum alkyls and magnesium alkyls. The most preferred organometallic compounds are aluminum alkyls, for example, triethylaluminum (TEAL), trimethylaluminum (TMAL), tri-isobutylaluminum (TIBAL) and tri-n-hexylaluminum (TNHAL). For example, where trimethylaluminum is being used to form methylalumoxane the resulting methylalumoxane mixture also contains some trimethylaluminum.

Typically when MAO is formed initially or purchased from a supplier it can contain gels. In one embodiment it is preferable that the cocatalyst or activator is "substantially free of gels." Gels can be removed by any method known in the art, for example, a filter can be used. It is also important to avoid gel formation when hydrolyzing the cocatalyst or activator of the invention. For the purposes of this patent specification "substantially free of gels" means that the activator contains less than 20 weight percent of gels based on the total weight of the activator less any solvents in the mixture, preferably less than 10 weight percent, more preferably less than 5 weight percent and most preferably less than 2 weight percent.

In the invention the activator is hydrolyzed at least once after its formation. For example, as it is well established in the art the reaction of a trialkylaluminum compound and water, within or added to a support material or simply just added to the aluminum compound, results in a hydrolysis reaction to form a cocatalyst, alumoxane. Hydrolysis is a well known procedure in the art. Any of the procedures including but not limited to, for example, EP-A-03542, EP-A-108 339, EP-A-299 391, EP-A-315 234, EP-A-200 351, EP-A-328 348, and EP-A-360 492 can be used. The preferred method of hydrolysis is by bubbling wet nitrogen through a solution of the cocatalyst or activator.

In one embodiment the cocatalyst or activator of the invention is modified by a proton donor, for example, any compound containing an acidic hydrogen atom, such as water. In yet another embodiment the cocatalyst or activator of the invention is contacted with a Lewis acid or Lewis base such as for example, alcohols, silanols, ethers and nitriles.

Typically when producing a cocatalyst or activator of the invention the cocatalyst or activator is typically formed from an organometallic compound. Once made the cocatalyst or activator comprises the activator compound and some of the starting organometallic compounds from which the cocatalyst or activator was initially made and some inert solvent, such as toluene.

It has been discovered in one preferred embodiment of Method B that the amount of modification, preferably by hydrolyzation, of the activator after its initial formation should satisfy the following expression:
HA/OM is equal to about 1.5 (A-0.08)
wherein A is the molar ratio of the organometallic compound to the total metal content of the activator initially formed which would include both the activator compound and the organometallic compound from which the activator was formed;
and HA is the number of moles of a hydrolyzing or modifying agent and OM is the number of moles of the starting organometallic compound remaining with the activator after its initial formation. For the purposes of this patent specification the term "equal to about" in the above expression means that HA/OM is within 20 percent, preferably less than 10 percent, more preferably less than 5 percent of 1.5 (A-0.08).

In a preferred embodiment the activator compound is methylalumoxane (MAO) which is made from TMAL where water (H₂O) is used as the hydrolyzing agent such that the mole ratio of H₂O/TMAL is in the range of 0.05 to 1.05, preferably 0.06 to 0.4 more preferably 0.07 to 0.3 and most preferably 0.07 to 0.2, where TMAL is the moles of TMAL remaining with MAO after its initial formation.

In the invention the preformed activator solution, which typically contains an excess of the organometallic compound from which the activator was initially made, is hydrolyzed further by any compound containing an acidic hydrogen, such as water. The amount of hydrolysis can vary, but it is preferred that the mole ratio of the hydrolyzing agent to the organometallic compound remaining in the activator solution is in the range of 0.05 to 1.05, preferably 0.07 to 0.5, more preferably 0.1 to 0.3 and most preferably 0.1 to 0.2.

It is preferred that the catalyst of the invention is prepared by first treating the carrier or support with an organometallic compound and then depositing the metallocene on the support. The coating material is then added and final product is dried to free-flowing powder. The porous carrier utilized in the invention have surface active sites such as labile protons of the carrier, for example, hydroxyl and/or water groups. Preferably, these surface active sites are reacted stoichiometrically with the organometallic compound. In the preferred embodiment of this invention the organometallic compound is reacted with the surface active sites in a mole ratio of less than or equal to 2.5:1, preferably from 2.5:1 to 0.5:1, more preferably, a ratio of about 1:1 is used, and most preferably a ratio of less than 1:1 is used.

The catalyst particle core comprises a majority of a porous carrier, an organometallic compound and a metallocene, and encapsulating the core is a coating which comprises a majority of a cocatalyst or activator for the metallocene.

The coating can be any activator or cocatalyst for the metallocene catalyst. The preferred coating can be an oxy-organoaluminum or other polymeric organoaluminum compounds, preferably, alumoxane, and most preferably, methylalumoxane (MAO).

The supported catalyst of the invention may give for better control over the behavior of the catalyst in an olefin polymerization environment, i.e., the heat of reaction at the catalyst site can be better controlled. For example, at constant reaction temperature and pressure there is a slower rate of initial monomer uptake as a function of reaction time for the catalysts of this invention.

For purposes of this patent specification the term "carrier" or "support" can be any material support, preferably a porous support, such as talc, inorganic oxides, inorganic chlorides, and resinous support materials such as polyolefin or polymeric compounds. Suitable inorganic oxide materials which are desirably employed include from the Periodic Table of Elements Groups 2, 3, 4, 5, 13 or 14 metal oxides. In a preferred embodiment, the catalyst support material include silica, alumina, silica-alumina, and mixtures thereof. Other inorganic oxides that may be employed either alone or in combination with the silica, alumina or silica-alumina are magnesia, titania and zirconia. Other suitable support materials can be employed such as, finely divided polyolefins, such as polyethylene or polymeric compounds and inorganic compounds such as magnesium dichloride and the like. The specific particle size of the support or inorganic oxide, surface area, pore volume, and number of hydroxyl groups are not critical to its utility in the practice of this invention. However, such characteristics determine the amount of support to be employed in preparing the catalyst compositions, as well as affecting the properties of polymers formed. The characteristics of the carrier or support must therefore be taken into consideration in choosing the same for use in the particular invention. In one embodiment the carrier is surface modified with surface modifying agents as described in U.S. Patent No. 5,124,418.

The porous carrier can be optionally contacted with an organometallic compound which can be the same or different from the compound used to initially form the activator of the invention. In this embodiment, it is preferred that the mole ratio of the organometallic compound to the number of surface active sites of the carrier are contacted in stoichiometric proportions.

It is preferred that the carrier of the catalyst of this invention has a surface area in the range of from 10 to 700 m²/g, pore volume in the range of from 0.1 to 2.5 ml/g and average particle size in the range of from 10 to 500 µ. More preferably, the surface area is in the range of from 50 to 500 m²/g, pore volume of from 0.5 to 2.0 ml/g and average particle size of from 20 to 200 µm. Most preferably the surface area range is from 200 to 400 m²/g, pore volume form 0.8 to 2.0 ml/g and average particle size is from 30 to 100 µm.

The catalyst system of this invention is described as having a central core portion and a coating portion that substantially covers the surface of the core. The core portion comprises a majority of a carrier and a metallocene compound and the coating portion comprises a majority of any activator for the metallocene compound. For the purposes of this patent specification the final catalyst comprises the core and the coating. The core generally contains between 5 to 95 wt% of the final catalyst and the coating will range from 5 to 95 wt% of the catalyst; preferably the core comprises 75 to 90 wt% of the final catalyst and the coating from 20 to 25 wt% and most preferably the core contains from 80 to 90 wt% and the coating from 10 to 20 wt%.

The loading of the elements in the core, the organometallic, metallocene and the cocatalyst and/or activator can be determined by typical elemental analysis techniques such as ICPES or XRF.

It is preferred that the catalyst system of the invention is prepared by contacting a carrier with a metallocene compound to form the core, followed by the addition of an activator in an amount that substantially covers the core surface.

In one embodiment in the method of the invention the activator is added after a sufficient length of time for a majority of the metallocene compound to enter the porous support, the length of time can be between 0 to 10 minutes to 24 hours, preferably 30 minutes to 12 hours, more preferably 45 minutes to 6 hours, even more preferably 1 1/2 hours to 3 hours and still even more preferably 1 1/2 hours to 2 1/2 hours and most preferably 1 hour to 2 hours. In another embodiment the activator is added after at least 85% to 98%, preferably at least 90% and most preferably at least 95% of the metallocene compound is deposited within the porous support. It is contemplated by the invention that the porous support is contacted with the metallocene compound in an inert solution and substantially dried before adding the activator in the same or different inert solution or simply in a dried form. The catalyst system of the invention is useful in a slurry state, but a semi-dried or dried state is preferred. It is also contemplated by this invention that the activator covers a majority of the core surface, at least 80-98 percent of the core surface, preferably 90-95 percent. For example, typically the surface of a porous support is uneven and rough with scattered areas of depressions. The activator in one embodiment occupies a majority of these depressions such that a minority of the surface of the porous support is not covered by the activator. The weight percent of activator based on the total weight of the catalyst system is from 20 to 25 wt%, more preferably 10 to 20 wt%.

In one embodiment of the invention the metallocene catalyst system of this invention can be used in combination with at least one other metallocene well known in the art to further control the properties of the polymer desired. It is preferred that a ratio of the catalyst of this invention to the other catalyst is preferably 1:19 to 19:1, more preferably 1:3 to 3:1, still more preferably 1:2 to 2:1 and most preferably 1:1.

### Polymerization Process

The catalyst system of this invention is suited for the polymerization of monomers and optionally comonomers in any polymerization or prepolymerization process, gas, slurry or solution phase; even a high pressure autoclave process can be utilized. In the preferred embodiment a gas phase process is utilized.

In the preferred embodiment, this invention is directed toward the gas phase polymerization or copolymerization reactions involving the polymerization or optionally prepolymerization of one or more of the alpha-olefin monomers having from 2 to 20 carbon atoms, preferably 2-12 carbon atoms. The invention is particularly well suited to the copolymerization reactions involving the polymerization of one or more of the monomers, for example alpha-olefin monomers of ethylene, propylene, butene-1, pentene-1, 4-methylpentene-1, hexene-1, octene-1, decene-1 and cyclic olefins such as styrene. Other monomers can include polar vinyl, dienes, norbornene, acetylene and aldehyde monomers. Preferably a copolymer of ethylene or propylene is produced. Preferably the comonomer is an alpha-olefin having from 3 to 15 carbon atoms, preferably 4 to 12 carbon atoms and most preferably 4 to 10 carbon atoms. In another embodiment ethylene is polymerized with at least two comonomers to form a terpolymer and the like.

In one embodiment of the process of the invention, the olefin(s) are prepolymerized in the presence of the catalyst system-of the invention prior to the main polymerization. The prepolymerization can be carried out batchwise or continuously in gas, solution or slurry phase including at elevated pressures. The prepolymerization can take place with any alpha-olefin monomer or combination and/or in the presence of any molecular weight controlling agent such as hydrogen. For details on prepolymerization see U.S. Patent No. 4,923,833 and 4,921,825 and EP-B-0279 863.

Typically in a gas phase polymerization process a continuous cycle is employed where in one part of the cycle, of a reactor, a cycling gas stream, otherwise known as a recycle stream or fluidizing medium, is heated in the reactor by the heat of polymerization. This heat is removed in another part of the cycle by a cooling system external to the reactor.

Generally in a gas fluidized bed process for producing polymer from monomers a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and new or fresh monomer is added to replace the polymerized monomer.

The catalyst is introduced into the reactor via a catalyst feeder mechanism either continuously or intermittently as is known in the art. Usually the catalyst is contained in a vessel with a mechanism for controlling the quantity of catalyst to be injected into the reactor. Typically the catalyst is introduced into the reactor with a gas such as nitrogen or can be introduced as a slurry in a inert volatile solvent. Many times these systems have multiple catalyst feeders and injection points for introducing catalyst into a reactor.

Using the catalyst of the invention results in a significant reduction in the amount of fines generated. Products that contain a high level of fines will permit the entrainment of these fines (containing in many instances active catalyst) out of the fluidized bed and into the recycle gas stream outside of the reactor. These fines will attach themselves to critical parts of the recycle system, such as the heat exchanger, or, the distributor plate. Once attached, they will continue to polymerize. The buildup of polymer in the heat exchanger, and the distributor plate will increase the pressure drop for the gases flowing through them, an undesirable effect.

The lower level of fines in the product of this invention results in fewer fines being entrained out of the reactor and also in the reactor allowing for a significantly longer periods for a stable operating process with minimal or substantially no fouling.

Typically with the catalyst of this invention, particularly where the porous carrier is silica, the percentage of fines less than 250 µ are less than 10 weight percent, more preferably 4 weight percent and, even more preferably 3 weight percent and most preferably less than 1.5 weight percent.

Also, typically with the catalyst of this invention the percentage of fines less than about 125 µ are less than 2 weight percent, more preferably about 1 weight percent and, even more preferably about 0.5 weight percent and most preferably less than 0.25 weight percent.

Further, typically with the catalyst of this invention the percentage of fines less than 63 µ are less than 0.5 weight percent, more preferably about 0.25 weight percent and, even more preferably about 0.15 weight percent and most preferably less than 0.01 weight percent,

MWD, or polydispersity, is a well known characteristic of polymers. MWD is generally described as the ratio of the weight average molecular weight (Mw) to the number average molecular weight (Mn). The ratio Mw/Mn can be measured directly by gel permeation chromatography techniques, or indirectly, by measuring the ratio of I₂₁ to I₂ as described in ASTM D-1238-F and ASTMD-1238-E respectively. I₂ is well known in the art as equivalent to Melt Index (MI). I₂₁ is also known as high load melt index (HLMI). MI is inversely proportional to the molecular weight of the polymer (Mw). The MI of the polymers of the invention are generally in the range of 0.1 dg/min to about 1000 dg/min, preferably 0.2 dg/min to 300 dg/min, more preferably 0.3 to 200 dg/min and most preferably 0.5 dg/min to 100 dg/min.

The ratio of I₂₁/I₂ is known as the melt index ratio (MIR) and for the purposes of this patent specification the ratio is also defined to be melt flow ratio (MFR). MIR is generally proportional to the MWD.

The MIR of the polymers of this invention are generally in the range of greater than 14 to 200, preferably 18 to 60 and most preferably 22 to 45.

In some instances where it is necessary to improve processability and adjust final end product characteristics the polymers produced by this present invention can be blended or coextruded into single or multilayer films with various other polymers well known in the art, for instance, LLDPE, LDPE, HDPE, PP, PB or EVA. The polymers produced by the process of the invention are useful in such forming operations include film, sheet, and fiber extrusion and coextrusion as well as blow molding, injection molding and roto molding. Films include blown or cast films in mono-layer or multilayer constructions formed by coextrusion or by lamination. Such films are useful as shrink film, cling film, stretch film, sealing films, oriented films, snack packaging, heavy duty bags, grocery sacks, baked and frozen food packaging, medical packaging, industrial liners, membranes, in food-contact and non-food contact applications. Fiber forming operations include melt spinning, solution spinning and melt blown fiber operations. Such fibers may be used in woven or non-woven form to make filters, diaper fabrics, medical garments, geotextiles. General extruded articles include medical tubing, wire and cable coatings, geomembranes, and pond liners. Molded articles include single and multi-layered constructions in the form of bottles, tanks, large hollow articles, rigid food containers and toys.

### EXAMPLES

In order to provide a better understanding of the present invention including representative advantages and limitations thereof, the following examples are offered.

Density is measured in accordance with ASTM-D-1238.

The ratio of Mw/Mn or MWD can be measured directly by gel permeation chromatography techniques.

For the purposes of this patent specification the MWD of a polymer is determined with a Waters Gel Permeation Chromatograph equipped with Ultrastyrogel columns and a refractive index detector. In this development, the operating temperatures of the instrument was set at 145°C, the eluting solvent was trichlorobenzene, and the calibration standards included sixteen polystyrenes of precisely known molecular weight, ranging from a molecular weight of 500 to a molecular weight of 5.2 million, and a polyethylene standard, NBS 1475.

Standard method for particle size distribution analysis, including measurement of fines was performed in accordance with ASTM-D-1921.

### EXAMPLE OF METHOD A

### Example 1A - not according to invention

50 g of Davison 948 silica that had been dehydrated to 850°C was weighed into a reaction flask and 250 cm³ nitrogen sparged heptane was added to slurry the silica. The flask was then immersed in a water bath maintained at 21°C. Then a solution of 0.729 g (ⁿPrCp)₂ZrCl₂ in 75 cm³ toluene was added with the temperature still at 21°C. After 1 h, 30 cm³ of a 30 wt-% methylalumoxane (MAO) in toluene was added such that the MAO loading on the final catalyst was 13.9 wt-%. The temperature was then raised to 70°C and maintained for 2 h. The catalyst was then dried to free-flowing powder under vacuum.

A sample of the catalyst described above was admitted into a semi-batch gas-phase reactor at 85°C. A feed of 5 mol-% 1-butene in ethylene was then fed into the reactor continuously to maintain the reactor pressure. After 1 h, the polymer formed was withdrawn and separated from the seed bed material and analyzed for resin molecular properties shown in Table 1A.

### Comparative Example 2A

50 g of Davison 948 silica that had been dehydrated to 200°C was weighed into a reaction flask and 250 cm³ nitrogen sparged heptane was added to slurry the silica. The flask was then immersed in a water bath maintained at 5°C. Then 64 cm³ of a 15 wt-% trimethylaluminum solution in heptane was added. After 1 h, the ice-water cooling bath was replaced with water bath at 20°C and reaction continued for another 30 minutes. Then a solution of 0.794 g (ⁿPrCp)₂ZrCl₂ in 75 cm³ toluene was added with the temperature still at 21°C. After 1 h, 30 cm³ of a 30 wt-% methylalumoxane (MAO) in toluene was added such that the MAO loading on the final catalyst was 13.9 wt-%. The temperature was then raised to 70°C and maintained for 2 h. The catalyst was then dried to free-flowing powder under vacuum.

A sample of the catalyst was then used for the polymerization of ethylene/1-butene as described in Example 1A above. After 1 h, the polymer formed was withdrawn and separated from the seed bed material and analyzed for resin molecular properties shown in Table 1A.

### Comparative Example 3A

50 g of Davison 948 silica that had been dehydrated to 200°C was weighed into a reaction flask and 250 cm³ nitrogen sparged heptane was added to slurry the silica. The flask was then immersed in a water bath maintained at 5°C. Then 64 cm³ of a 15 wt-% trimethylaluminum solution in heptane was added. After 1 h, the ice-water cooling bath was replaced with water bath at 20°C and reaction continued for another 30 minutes. Then a solution of 0.988 g (ⁿPrCp)₂ZrCl₂ in 75 cm³ toluene was added with the temperature still at 21°C. After 1 h, 45 cm³ of a 30 wt-% methylalumoxane (MAO) in toluene was added such that the MAO loading on the final catalyst was 17.9 wt-%. The temperature was then raised to 70°C and maintained for 2 h. The catalyst was then dried to free-flowing powder under vacuum.

A sample of the catalyst was then used for the polymerization of ethylene/1-butene as described in Example 1A above. After 1 h, the polymer formed was withdrawn and separated from the seed bed material and analyzed for resin molecular properties shown in Table 1A.

**Table 1A**

| **Example** | **Zr wt-%** | **MAO wt-%** | **Activity**^{**1**} | **Specific Activity**^{**2**} | **Density** | **I**_{**2**} | **I**_{**21**}**/I**_{**2**} | **Catalyst Recipe** |
|---|---|---|---|---|---|---|---|---|
| 1A | 0.35 | 13.9 | 2472 | 706 | 0.9102 | 5.0 | 16.6 | [(SiO₂ + Metallocene) + MAO] |
| C-2A | 0.30 | 13.9 | 1295 | 432 | 0.9167 | 3.2 | 17.5 | {[(SiO₂ + IMA) + Metallocene] + MAO} |
| C-3A | 0.30 | 17.9 | 1669 | 556 | 0.9151 | 3.9 | 18.4 | {[(SiO₂ + TMA) + Metallocene] + MAO} |

| | | | | | | | | |
|---|---|---|---|---|---|---|---|---|
| ¹ g PE/(g CAT * h * 150 psi), | | | | | | | | |
| ² Kg PE/(g Zr * h * 150 psi) | | | | | | | | |

### Comparative Example 4A

This catalyst was prepared by first reacting undehydrated Davison 948 silica, having about 10 wt-% LOI, with trimethylaluminum such that the molar ratio (TMA:H₂O) is about 1:1, and then reacting the reaction product of treated support material with (1,3-MeⁿBuCp)₂ZrCl₂ and then drying the catalyst formed to free-flowing powder under vacuum. The catalyst of this example has an A1 loading of 16 wt-%.

A sample of the catalyst was then used for the polymerization of ethylene/1-butene as described in Example 1A above. After 1 h, the polymer formed was withdrawn and separated from the seed bed material and analyzed for resin molecular properties shown in Table 2A. It was observed that after the polymerization run, the reactor was badly fouled ; severe wall sheeting and polymer chunks in the bed.

### Comparative Example 5A

This catalyst was prepared by first reacting Davison 948 silica that had been dehydrated to 200°C with preformed methylalumoxane and then reacting the reaction product of such treated support material with (1,3-MeⁿBuCp)₂ZrCl₂; and then drying the catalyst formed to free-flowing powder under vacuum. The catalyst of this example has an A1 loading of about 12 wt-%.

A sample of the catalyst was then used for the polymerization of ethylene/1-butene as described in Example 1A above. After 1 h, the polymer formed was withdrawn and separated from the seed bed material and analyzed for resin molecular properties shown in Table 2A. It was observed that after the polymerization run, the reactor was badly fouled ; severe wall sheeting.

### Comparative Example 6A

1.495 g of (1,3-MeⁿBuCp)₂ZrCl₂ was dissolved in 60 cm³ toluene and added slowly to 74 cm³ of 30 wt-% methylalumoxane in toluene at 21°C. The temperature was raised to 70°C. After 1 h, the resulting solution was cooled to 22°C and added to a 60 cm³ hexane slurry of 10 g of Davison 948 silica that had been dehydrated to 850°C. After 1 h, the solvent was removed under vacuum to give a free-flowing powder.

A sample of the catalyst was then used for the polymerization of ethylene/l-butene as described in Example 1A above. After 1 h, the polymer. formed was withdrawn and separated from the seed bed material and analyzed for resin molecular properties shown in Table 2A. It was observed that after the polymerization run, the reactor was badly fouled ; polymer chunks in the bed.

### Comparative Example 7A

50 g of Davison 948 silica that had been dehydrated to 400°C was weighed into a reaction flask and 300 cm³ nitrogen sparged heptane was added to slurry the silica. The flask was then immersed in a water bath maintained at 25°C. Then 41 cm³ of a 15 wt-% trimethylaluminum solution in heptane was added. After 1 h, 1.4 g (1,3-MeⁿBuCp)₂ZrCl₂ dissolved in 110 cm³ toluene was added with the temperature still at 25°C. After 1 h, 140 cm³ of a 10 wt-% methylalumoxane (MAO) in toluene was added. The temperature was maintained for 2 h at 25°C. The catalyst was then dried to free-flowing powder under vacuum at 60°C.

A sample of the catalyst was then used for the polymerization of ethylene/1-butene as described in Example 1A above. After 1 h, the polymer formed was withdrawn and separated from the seed bed material and analyzed for resin molecular properties shown in Table 2A. It was observed that after the polymerization run, the reactor was very clean; no fouling of any kind.

### Example 8A - not according to invention

50 g of Davison 948 silica that had been dehydrated to 850°C was weighed into a reaction flask and 300 cm³ nitrogen sparged heptane was added to slurry the silica. The flask was then immersed in a water bath maintained at 25°C. Then a solution of 1.335 g (MeⁿBuCp)₂ZrCl₂ in 85 cm³ toluene was added with the temperature still at 21°C. After 1 h, 134 cm³ of a 10 wt-% methylalumoxane (MAO) in toluene was added and maintained for 2 h. The catalyst was then dried to free-flowing powder under vacuum at 60°C.

A sample of the catalyst was then used for the polymerization of ethylene/1-butene as described in Example 1A above. After 1 h, the polymer formed was withdrawn and separated from the seed bed material and analyzed for resin molecular properties shown in Table 2A. It was observed that after the polymerization run, the reactor was very clean; no fouling of any kind.

**Table 2A**

| **Example** | **Zr wt-%** | **Activity**^{**1**} | **Specific Activity**^{**2**} | **Density** | **I**_{**2**} | **I**_{**21**}**/I**_{**2**} | **Catalyst Recipe** |
|---|---|---|---|---|---|---|---|
| C-4A | 0.40 | 1115 | 279 | 0.9157 | 0.85 | 20.0 | [(wet-SiO₂ + TMA) + Metallocene] |
| C-5A | 0.30 | 991 | 330 | 0.9151 | 0.68 | 17.7 | [(SiO₂ + MAO) + Metallocene] |
| C-6A | 1.0 | 1002 | 100 | 0.9164 | 1.22 | 25.2 | [SiO₂ + (Metallocene + MAO)] |
| C-7A | 0.44 | 1150 | 261 | 0.9120 | 0.84 | 20.8 | {[(SiO₂ + TMA) + Metallocene] + MAO} |
| 8A | 0.44 | 1622 | 369 | 0.9107 | 0.91 | 19.8 | [(SiO₂ + Metallocene) + MAO] |

| | | | | | | | |
|---|---|---|---|---|---|---|---|
| ¹ g PE/(g CAT * h * 150 psi), | | | | | | | |
| ² Kg PE/(g Zr * h * 150 psi) | | | | | | | |

### EXAMPLES ACCORDING TO INVENTION

The standard method for particle size distribution analysis, including measurement of fines as performed in accordance with ASTM-D-1921.

### Comparative Example 1B

This catalyst was prepared by first reacting undehydrated Davison 948 silica, having about 10 wt-% LOI, with trimethyl aluminum such that the molar ratio (IMA:H₂O) is about 1:1, and then reacting the reaction product of such treated support material with (1,3-MeⁿBuCp)₂ZrCl₂ and then drying the catalyst formed to a free-flowing powder for use in a gas-phase reactor. The catalyst of this example has an Al loading of about 16 wt-% and Zr loading of about 0.4 wt-%.

0.35 g sample of TMA-treated silica was added into a catalyst holding tube as a bottom layer of treated silica, to this was added 0.2 g of the silica-supported catalyst described above, then a second layer of 0.35 g of TMA-treated silica was added as a top layer such that the silica-supported metallocene was sandwiched between two layers of TMA-treated silica. This catalyst holding tube was, meanwhile, clamped in place such that no shaking took place. This catalyst setup was then introduced into a semi-batch gas-phase reactor under a N₂ pressure. A feed of 1-butene in ethylene was then introduced into the reactor at 85°C. The pressure in the reactor was held constant by continuously feeding 5 mol-% 1-butene in ethylene to compensate for any pressure change due to polymerization. After 1 h, the polymer formed was separated from the seed bed material and analyzed for resin molecular properties and the results are shown in Table 1B. The resulting polymer contained some chips and shreds of fused polymer.

### Comparative Example 2B

This catalyst was prepared by first reacting Davison 948 silica that had been dehydrated to 200°C with preformed methylalumoxane and then reacting the reaction product of the treated support material with (1,3-MeⁿBuCp)₂ZrCl₂; and then drying the catalyst formed to a free-flowing powder for use in a gas-phase reactor. The catalyst of this example has an A1 loading of about 12 wt-% and Zr loading of about 0.45 wt-%.

The catalyst was then tested in a manner similar to that described in Example 1B. After 1 h, the polymer formed was separated from the seed bed material and analyzed for resin molecular properties and the results are shown in Table 1B.

### Comparative Example 3B

383 g of Davison 948 silica that had been dehydrated to 200°C was weighed into a 5-liter reaction flask and 2000 cm³ nitrogen sparged heptane was added to slurry the silica. The flask was immersed in an ice-water bath maintained at 5°C. Then 475 cm³ of a 15 wt-% TMA in heptane was added. After 1 h, the ice-water bath was replaced with a warmer water bath at 25°C and a solution of 8.38 g (1,3-MeⁿBuCp)₂ZrCl₂ in 225 cm³ toluene was added with the temperature still at 25°C. After 2 h, 260 cm³ of a 30 wt-% methylalumoxane (MAO) in toluene was added. The temperature was then raised to 70°C and maintained for 2 h. The catalyst was then dried to free-flowing powder under vacuum. This catalyst has an Al loading of 6.5 wt-% and Zr loading of 0.35 wt-%.

The catalyst was then tested in a manner similar to that described in Example 1B except that the amount of catalyst used was 0.15 g. After 1 h, the polymer formed was separated from the seed bed material and analyzed for resin molecular properties and the results are shown in Table 1B.

### Example 4B

In a 5-liter flask, 1000 cm³ of filtered 10 wt-% MAO solution in toluene corresponding to 53 g MAO was added to 1800 cm³ freshly distilled toluene. The flask was immersed in hot water bath at 60°C and agitated mechanically. Hydrolysis was then performed by bubbling nitrogen slowly through 4 cm³ deionized water and through a dip-tube inside the MAO solution until all the water was completely used up. It is preferred that the hydrolysis take place as near as possible to the time when the catalyst system of the invention is being made.

278 g of Davison 948 silica that had been dehydrated to 200°C was weighed into a separate 5-liter reaction flask and 1500 cm³ nitrogen sparged heptane was added to slurry the silica. The flask was immersed in an ice-water bath maintained at 5°C. Then 345 cm³ of a 15 wt-% TMA in heptane was added. After ½ h, the ice-water bath was replaced with a warmer water bath at 25°C. The reaction medium was allowed to equilibrate at this temperature for 1 h and then a solution of 6.1 g (1,3-MeⁿBuCp)₂ZrCl₂ in 200 cm³ toluene was added with the temperature still at 25°C. After 2 h, the solution of treated MAO from above was then added. The temperature was raised to 70°C and maintained for 2 h. The catalyst was then dried to free-flowing powder under vacuum. This catalyst has an Al loading of 6.5 wt-% and Zr loading of 0.35 wt-%.

The catalyst was then tested in a manner similar to that described in Example 1B. After 1 h, the polymer formed was separated from the seed bed material and analyzed for resin molecular properties and the results are shown in Table 1B.

**Table 1B**

| **Example** | **Yield (g)** | **Normalized**^{**1**} **Catalyst Activity** | **Density g/cc** | **I**_{**2.1**} | **I**_{**21**}**/I**_{**2.1**} |
|---|---|---|---|---|---|
| C-1B | 107 | 1115 | 0.9157 | 0.85 | 20.0 |
| C-2B | 258 | 1444 | 0.9112 | 0.77 | 18.9 |
| C-3B | 180 | 1395 | 0.9117 | 0.98 | 20.9 |
| 4B | 228 | 1527 | 0.9114 | 1.05 | 19.5 |

| | | | | | |
|---|---|---|---|---|---|
| ¹ gPE/(gCAT. h. 150 psi) | | | | | |

### Comparative Examples 5B-7B and Example 8B

The catalysts described in Comparative Examples 1B - 3B and Example 4B above were then tested in a pilot plant, the results of which are illustrated in Table 2B as Comparative Examples 5B - 7B and Example 8B respectively. The catalyst was fed continuously into a fluid bed gas-phase pilot plant reactor (internal diameter of 16¼ inches (41 cm)) maintained at 165°F (74°C) and 300 psig (2171 kPa) total pressure. The product was withdrawn continuously through a product discharge outlet to maintain a constant bed height in the reactor. The composition of the gas phase, and operating conditions for the reactor are as follows:

**Table 2B**

| **Example** | **C-5B** | **C-6B** | **C-7B** | **8B** |
|---|---|---|---|---|
| Ethylene (mole %) | 35.0 | 34.8 | 34.9 | 35.0 |
| 1-Butene (mole %) | 1.0 | 1.01 | 1.03 | 1.0 |
| 1-Hexene (mole %) | 0.65 | 0.636 | 0.63 | 0.66 |
| Hydrogen (ppm) | 126 | 118 | 120 | 120 |
| Nitrogen | balance | balance | balance | balance |
| Catalyst Used | C-1 | C-2 | C-3 | 4 |
| Catalyst feed (g/h) | 4.81 | 5.19 | 5.25 | 8.27 |
| Catalyst Productivity (lb/lb) (g/g) | 3465 | 3210 | 2575 | 2914 |
| 1% tri-iso-Butyl feed (cc/hr) | 210 | 335 | 260 | 260 |
| Production Rate (lbs/hr) | 38.9 | 36.7 | 34.3 | 40.7 |
| Production Rate (kg/hr) | 17.6 | 16.6 | 15.6 | 18.5 |
| Reaction Temperature (°F) | 165 | 165 | 165 | 165 |
| Reaction Temperature (°C) | 74 | 74 | 74 | 74 |
| Bed Weight (lbs) | 238 | 238 | 238 | 238 |
| Bed Weight (kg) | 108 | 108 | 108 | 108 |
| Residence Time (hrs) | 6.12 | 6.49 | 6.94 | 5.85 |
| Gas Velocity (ft/s) | 1.55 | 1.5 | 1.58 | 1.55 |
| Gas Velocity (m/s) | 0.47 | 0.46 | 0.48 | 0.47 |
| Bed Height/Diameter Ratio | 5.7 | 6.3 | 6.1 | 6.0 |

The polymerization of ethylene with the mixture of butene and hexene produced a terpolymer wherein the total comonomers were in the weight ratio of 75:25 (Hexene:Butene). The product properties and fines data are summarized in Table 3B. The fines data show below illustrate the extent to which particle attrition, or break-up has been minimized. The examples noted here were demonstrated at steady state operation with a minimum of five bed turn-overs.

**Table 3B**

| **Example** | **C-5B** | **C-6B** | **C-7B** | **8B** |
|---|---|---|---|---|
| MI | 2.54 | 2.45 | 2.09 | 2.55 |
| Density (g/cm³) | 0.9051 | 0.909 | 0.9083 | 0.9054 |
| Bulk density (g/cm³) | 0.479 | 0.429 | 0.443 | 0.450 |
| APS (µ) | 695 | 652 | 710 | 702 |
| COV | 0.40 | 0.50 | 0.41 | 0.37 |
| wt.% Fines <250µ | 2.10 | 7.70 | 1.65 | 1.10 |
| wt.%Fines <125µ | 0.50 | 1.34 | 0.30 | 0.10 |
| wt.% Fines <63µ | 0.05 | 0.20 | 0.10 | 0.00 |

The improvement in the fouling characteristics can be quantified in terms of the reduced rate of increase in pressure drop of the gases flowing through the heat exchanger, and the distributor plate recorded during these tests. Typically the distributor plate is located within the reactor but below the reaction zone in a reactor. The recycle stream upon entering the reactor typically passes through a distributor plate. More information can be found in the disclosure of U.S. Patent 4,543,399.

Products that contain a high level of fines will permit the entrainment of these fines (containing in many instances active catalyst) out of the fluidized bed and into the recycle gas stream outside of the reactor. These fines will attach themselves to critical parts of the recycle system, such as the heat exchanger, or, the distributor plate. Once attached, they will continue to polymerize. The buildup of polymer in the heat exchanger, and the distributor plate will increase the pressure drop for the gases flowing through them, an undesirable effect.

The lower level of fines in the product made by this invention (Example 8B in Table 3B) will result in fewer fines being entrained out of the reactor and also in the reactor allowing for a significantly longer periods for a stable operating process with minimal or substantially no fouling. The reduction in the rate of fouling is evidenced by the low pressure drop data as shown in Table 4B.

**Table 4B**

| Example | C-5B | C-6B | C-7B | 8B |
|---|---|---|---|---|
| Heat Exchanger Pressurt drop increase (Ibs/sq. inch) [Kg/cm³I)] | (0.06) [0.004] | (0.01) [0.0007] | (0.02) [0.001] | (0.01) [0.0007] |
| Distributor Plate Pressure drop intrease (inches of water) [cm of water] | (2.9) [7.4] | (0.6) [1.5] | (2.0) [5.1] | (0.1) [0.254] |

The improvement in the particle size distribution is illustrated in Figure 1B. For example, it can be seen from Figure 1B that in the case of comparative Example 6B, the cumulative weight fraction of the product that is finer than 100µ is about 0.7 weight percent. In Example δB of the invention, the cumulative weight fraction of the product finer than 100µ is only 0.07 weight percent.

### EXAMPLES OF METHOD C - not according to invention

For the purposes of this patent specification, the designation of (1,2/1,3-MeEtCp)₂ZrCl₂ is illustrative of one embodiment of a catalyst of the invention, which is a mixture of (1,2-methyl ethyl Cp)₂ZrCl₂, (1,3-methyl ethyl Cp)₂ ZrCl₂ and (1,2-methyl ethyl Cp)(1,3-methyl ethyl Cp)ZrCl₂.

### Example 1C

### Preparation of supported (ⁿBuCp)₂ZrCl₂ Catalyst

27.7 g of Davison 948 silica dried to 200°C was slurried in 200 cm³ heptane in a reaction flask. The flask was cooled to 0°C and 58 cm³ of 10 wt% trimethyl aluminum solution in iso-pentane was added slowly. The reaction was allowed to proceed for 1 h and then the temperature was raised to 65°C. Then a solution of 1.228 g (ⁿBuCp)₂ZrCl₂ in toluene was added slowly. After 1 h, 53 cm³ of 30 wt% methylalumoxane solution in toluene was added and the reaction allowed to proceed for another 1 h before drying the final catalyst to free-flowing powder under vacuum. This method of preparing the catalyst illustrate the invention.

### Polymerization Test

The silica supported catalyst as prepared above was tested for ethylene/1-hexene co-polymerization in a continuous fluid bed gas-phase reactor operated at 300 psig (2171 KPa) total pressure, 65°C reactor temperature and 0.7 ft/s (0.213 m/s) cycle gas velocity. The catalyst was fed at a rate that maintained a constant rate of product discharge from the reactor. The reactor gas mixture was composed of 45% ethylene, 0.5% 1-hexene and 400 ppm H₂ with the balance being nitrogen.

### Example 2C

### Preparation of supported (ⁿBuCp)₂ZrCl₂ Catalyst

10 g of Davison 948 silica dried to 200°C was slurried in 50 cm³ toluene in a reaction flask. The flask was cooled to 0°C and 56 cm³ of 10 wt% methylalumoxane in toluene was added. After 0.5 h, the temperature was raised to 65°C and maintained for 1.5 h. Then a toluene solution of 0.338 g (ⁿBuCp)₂ZrCl₂ was added slowly. The reaction condition was maintained for 1 h and then the resultant catalyst was dried to free-flowing powder under reduced pressure. The catalyst was tested for the co-polymerization of ethylene/1-hexene as described in Example 1C with a reactor gas composition of 43% ethylene, 0.3% hexene-1 and 375 ppm H₂.

### Example 3C

### Preparation of supported (ⁱPrCp)₂ZrCl₂ Catalyst

30 g of Davison 948 silica dried to 200°C was slurried in 200 cm³ heptane in a reaction flask. The flask was cooled to 0°C and 63 cm³ of 10 wt% trimethyl aluminum solution in iso-pentane was added slowly. The reaction was allowed to proceed for 1 h and then the temperature was raised to 65°C. Then a solution of 1.251 g (ⁱPrCp)₂ZrCl₂ in toluene was added slowly. After 1.5 h, 59 cm³ of 30 wt% methylalumoxane solution in toluene was added and the reaction allowed to proceed for another 1 h before drying the final catalyst to free-flowing powder under vacuum. This method of preparing the catalyst illustrate the invention. The catalyst was tested for the co-polymerization of ethylene/1-butene in a semi-batch gas-phase reactor at 85°C. The pressure in the reactor was held constant by continuously feeding 5 mol-% 1-butene in ethylene to compensate for any pressure change due to polymerization. After 0.5 h, the polymer formed was separated from the seed bed material and analyzed for resin molecular properties shown in Table 1C.

### Example 4C

### Preparation of supported (ⁱPrCp)₂ZrCl₂ Catalyst

212 g of Davison 948 silica dried to 200°C was slurried in 1500 cm³ heptane in a reaction flask. The flask was cooled to 0°C and 370 cm³ of 30 wt% methylalumoxane in toluene was added. After 0.5 h, the temperature was raised to 70°C and maintained for 3 h. Then a toluene solution of 8 g (ⁱPrCp)₂ZrCl₂ was added slowly. The reaction condition was maintained for 1 h and then the resultant catalyst was dried to free-flowing powder under reduced pressure. The catalyst was tested for the co-polymerization of ethylene/1-butene as described in Example 3C.

### Example 5C

### Preparation of supported (ⁱPrCp)₂ZrCl₂ Catalyst

10 g of Davison 948 silica dried to 200°C was slurried in 100 cm³ toluene in a reaction flask. Then 4.5 g dried MAO solid was dissolved in 60 cm³ toluene and added to the silica slurry at 25°C. After 0.5 h, the temperature was raised to 70°C and maintained for 3.5 h. Then a toluene solution of 0.368 g (ⁱPrCp)₂ZrCl₂ was added slowly. The reaction condition was maintained for 1 h and then the resultant catalyst was dried to free-flowing powder under reduced pressure. The catalyst was tested for the co-polymerization of ethylene/1-butene as described in Example 3C.

### Example 6C

### Preparation of supported (ⁱPrCp)₂ZrCl₂ Catalyst

20 g Davison 948 silica having Loss-On-Ignition (LOI) value of 9.5 wt% was added slowly to 37 cm³ of 15 wt% trimethyl aluminum solution in heptane in a reaction flask at 5°C. After all the silica had been added the slurry was allowed to warm up to 22°C and this was maintained for 1 h. Then 36 cm³ 30 wt% MAO solution in toluene was added and then the temperature was raised to 70°C and maintained for 4 h. Then a toluene solution of 0.809 g (ⁱPrCp)₂ZrCl₂ was added slowly. The reaction condition was maintained for 1.5 h and then the resultant catalyst was dried to free-flowing powder under reduced pressure. The catalyst was tested for the co-polymerization of ethylene/1-butene as described in Example 3C.

### Example 7C

### Preparation of supported {(1,2/1,3-MeEtCp)₂ZrCl₂ / (ⁿPrCp)₂ZrCl₂ }

40 g of Davison 948 silica dried to 200°C was slurried in 250 cm³ heptane in a reaction flask. Then 51 cm³ of 30 wt% MAO solution in toluene was added at 0°C. After 0.5 h, the temperature was raised to 70°C and maintained for 4 h. Then a toluene solution of 0.679 g (1,2/1,3-MeEtCp)₂ZrCl₂ mixed with 0.226 g (ⁿPrCp)₂ZrCl₂ was added slowly followed by a 1 h hold of the reaction conditions. The final catalyst was dried to free-flowing powder under vacuum. The catalyst was tested for the co-polymerization of ethylene/1-butene as described in Example 3C.

### Example 8C

### Preparation of supported {(1,2/1,3-MeEtCp)₂ZrCl₂ / (ⁿPrCp)₂ZrCl₂ }

50 g of Davison 948 silica dried to 200°C was slurried in 300 cm³ heptane in a reaction flask. The flask was cooled to 0°C and 64 cm³ of 15 wt% trimethyl aluminum solution in heptane was added slowly. The reaction was allowed to proceed for 1 h and then the temperature was raised to 70°C. Then a toluene solution of 1.18 g (1,2/1,3-MeEtCp)₂ZrCl₂ mixed with 0.393 g (ⁿPrCp)₂ZrCl₂ was added slowly followed by a 1 h hold of the reaction conditions. 94 cm³ of 30 wt% methylalumoxane solution in toluene was added and the reaction allowed to proceed for another 3 h before drying the final catalyst to free-flowing powder under vacuum. This method of preparing the catalyst illustrate the invention. The catalyst was tested for the co-polymerization of ethylene/1-butene as described in Example 3C.

**Table 1C**

| **(**^{**n**}**BuCp)**_{**2**}**ZrCl**_{**2**} | | | | | | |
|---|---|---|---|---|---|---|
| **Example** | **Catalyst Activity** | **Density** | **I**_{**21**} | **M**_{**w**} | **M**_{**w**}**/M**_{**n**} | **Note** |
| 1C | 1280 | 0.9301 | 12.7 | 51600 | 3.1 | 1 |
| 2C | 500 | 0.9370 | 19.6 | 43400 | 2.4 | 2 |

| | | | | | | |
|---|---|---|---|---|---|---|
| 1. {[SiO₂ + TMA] + (ⁿBuCp)₂ZrCl₂} + MAO (Invention) | | | | | | |
| 2. {SiO₂ + MAO} + (ⁿBuCp)₂ZrCl₂ (Comparative) | | | | | | |

**Table 2C**

| **(**^{**i**}**PrCp)**_{**2**}**ZrCl**_{**2**} | | | | |
|---|---|---|---|---|
| **Example** | **Catalyst Activity** | **M**_{**w**} | **M**_{**w**}**/M**_{**n**} | **Note** |
| 3C | 416 | 84300 | 7.6 | 1 |
| 4C | 476 | 82200 | 5.0 | 2 |
| 5C | 264 | 68000 | 5.9 | 3 |
| 6C | 513 | 88200 | 5.7 | 4 |

| | | | | |
|---|---|---|---|---|
| 1. {[SiO₂ + TMA] + (ⁱPrCp)₂ZrCl₂} + MAO (Invention) | | | | |
| 2. {SiO₂ + MAO} + (ⁱPrCp)₂ZrCl₂ (Comparative) | | | | |
| 3. {SiO₂ + Dried-MAO} + (ⁱPrCp)₂ZrCl₂ (Comparative) | | | | |
| 4. {[TMA + SiO₂] + MAO} + (ⁱPrCp)₂ZrCl₂ (Comparative) | | | | |

**Table 3C**

| **Exampl** | **Metallocene(s)** | **Catalyst Activity** | **Density** | **I**_{**21**} | **I**_{**21**}**/I**_{**2**} | **M**_{**w**} | **M**_{**w**}**/M**_{**n**} | **Comments** | |
|---|---|---|---|---|---|---|---|---|---|
| | | | | | | | | Note | Alkyl Type |
| 7C | (1,2/1,3-MeEtCp)₂ZrCl₂ + (ⁿPrCp)₂ZrCl₂ | 1027 | 0.9237 | 2.4 | 19.8 | 82300 | 3.0 | 1 | - |
| 8C | " | 907 | 0.9193 | 0.7 | 32.0 | 103200 | 4.9 | 2 | TMAL |

| | | | | | | | | | |
|---|---|---|---|---|---|---|---|---|---|
| 1 {SiO₂ + MAO} + Metallocene(s) (Comparative) | | | | | | | | | |
| 2 {[SiO₂ + Aluminum Alkyl] + Metallocene(s)} + MAO (Invention) | | | | | | | | | |

While the present invention has been described and illustrated by reference to particular embodiments, it will be appreciated by those of ordinary skill in the art that the inventions lends itself to variations not necessarily illustrated herein. For example, it is not beyond the scope of this invention to mix at least two of the catalysts of the invention or to use the catalyst of the invention with any other catalyst or catalyst system known in the art, for example a traditional Ziegler-Natta catalyst or catalyst system. Also, the catalyst of the invention is useful in slurry, solution, gas phase and high pressure polymerization processes or mixtures thereof. For this reason, then, reference should be made solely to the appended claims for purposes of determining the true scope of the present invention.

## Claims

1. A method to produce a supported catalyst system comprising the steps of:
a) contacting a porous carrier having surface active sites with labile protons with an organometallic compound,
b) adding at least one metallocene of Group 4, 5 or 6
c) adding an activator of alumoxane wherein the mol ratio of the organometallic compound to the surface active sites of the carrier is less than or equal to 2.5:1, and wherein the activator has been hydrolyzed at least once after its initial formation.

2. The method according to claim 1 wherein said activator is hydrolyzed by a proton donor, or a hydrolyzing agent selected from one of the group consisting of water, Lewis acids and Lewis bases.

3. The method according to claims 1 and 2 wherein the cocatalyst or activator is hydrolyzed in an amount such that the following equation is satisfied:
HA/OM is equal to about 1.5 (A-0.08)
wherein A is the molar ratio of the organometallic compound to the total metal content of the cocatalyst or activator initially formed which would include both the cocatalyst or activator and the organometallic compound from which the cocatalyst or activator was formed and HA is the number of moles of a hydrolyzing or modification agent and OM is the number of moles of the organometallic compound remaining in the cocatalyst or activator after being initially formed.

4. The method according to claim 3 wherein the mole ratio of hydrolyzing agent to the organometallic compound remaining after the initial formation of the activator is in the range of about 0.07 to about 0.5, wherein the hydrolyzing agent is water and the organometallic compound is an aluminum containing compound and wherein the mole ratio of water to the aluminum containing compound remaining after the initial formation of alumoxane is in the range of about 0.07 to 0.3.

5. The method of any preceding claims wherein the mole ratio of said organometallic compound to the surface active sites of said porous carrier is in the range of 0.5:1 to 2.5:1, preferably a mole ratio less than or equal to 1:1.

6. A process for polymerizing olefins alone or in combination with one or more other olefins, said process comprising polymerizing in the presence of the supported catalyst system of any one of the preceding claims.

7. The catalyst system of any one of the claims 1-5 comprising:
(i) a core, said core comprising a majority of a porous carrier, and a metallocene compound; and
(ii) a coating, said coating substantially covering said core, and said coating comprising a majority of an activator for said metallocene compound.

## Patentansprüche

1. Verfahren zur Herstellung eines Trägerkatalysatorsystems, bei dem in Stufen
a) poröser Träger mit oberflächenaktiven Stellen mit labilen Protonen mit organometallischer Verbindung kontaktiert wird,
b) mindestens ein Metallocen der Gruppe 4, 5 oder 6 zugesetzt wird,
c) Aktivator aus Alumoxan zugesetzt wird, wobei das Molverhältnis der organometallischen Verbindung zu den oberflächenaktiven Stellen des Trägers weniger als oder gleich 2,5:1 ist und wobei der Aktivator mindestens einmal nach seiner anfänglichen Bildung hydrolysiert worden ist.

2. Verfahren nach Anspruch 1, bei dem der Aktivator durch einen Protonendonator oder ein Hydrolysierungsmittel ausgewählt aus einem aus der Gruppe bestehend aus Wasser, Lewissäuren und Lewisbasen hydrolysiert wird.

3. Verfahren nach den Ansprüchen 1 und 2, bei dem der Cokatalysator oder Aktivator in einem Maße hydrolysiert wird, so dass der folgenden Gleichung entsprochen wird:
HA/OM ist gleich etwa 1,5(A-0,08),
wobei A das Molverhältnis der organometallischen Verbindung zu dem Gesamtmetallgehalt des anfänglich gebildeten Cokatalysators oder Aktivators ist, was sowohl den Cokatalysator oder Aktivator als auch die organometallische Verbindung einschließt, aus der der Cokatalysator oder Aktivator gebildet wurde, und HA die Anzahl der Mol an Hydrolysierungs- oder Modifizierungsmittel ist und OM die Anzahl der Mol der organometallischen Verbindung ist, die in dem Cokatalysator oder Aktivator verbleiben, nachdem er anfänglich gebildet wurde.

4. Verfahren nach Anspruch 3, bei dem das Molverhältnis von Hydrolysierungsmittel zu der organometallischen Verbindung, die nach der anfänglichen Bildung des Aktivators verbleibt, im Bereich von etwa 0,07 bis etwa 0,5 liegt, wobei das Hydrolysierungsmittel Wasser ist und die organometallische Verbindung eine aluminiumhaltige Verbindung ist und wobei das Molverhältnis von Wasser zu der aluminiumhaltigen Verbindung, die nach der anfänglichen Bildung von Alumoxan verbleibt, im Bereich von etwa 0,07 bis 0,3 liegt.

5. Verfahren nach einem der vorhergehenden Ansprüchen, bei dem das Molverhältnis der organometallischen Verbindung zu den oberflächenaktiven Stellen des porösen Trägers im Bereich von 0,5:1 bis 2,5:1 liegt, wobei das Molverhältnis vorzugsweise kleiner als oder gleich 1:1 ist.

6. Verfahren zum Polymerisieren von Olefinen allein oder in Kombination mit einem oder mehreren anderen Olefinen, wobei in Anwesenheit des Trägerkatalysatorsystems gemäß einem der vorhergehenden Ansprüche polymerisiert wird.

7. Katalysatorsystem nach einem der Ansprüche 1 bis 5, das
(i) einen Kern, wobei der Kern überwiegend porösen Träger und Metallocenverbindung umfasst, und
(ii) eine Beschichtung umfasst, wobei die Beschichtung den Kern im wesentlichen bedeckt und die Beschichtung überwiegend Aktivator für die Metallocenverbindung umfasst.

## Revendications

1. Procédé pour la production d'un système de catalyseur fixé sur un support, comprenant les étapes consistant :
a) à mettre en contact un support poreux ayant des sites actifs de surface avec des protons labiles avec un composé organométallique,
b) à ajouter au moins un métallocène du groupe 4, 5 ou 6,
c) à ajouter un activateur constitué d'un alumoxane, dans lequel le rapport molaire du composé organométallique aux sites actifs de surface du support est inférieur ou égal à 2 : 5 : 1, et dans lequel l'activateur a été hydrolysé au moins une fois après sa formation initiale.

2. Procédé suivant la revendication 1, dans lequel l'activateur est hydrolysé par un donneur de protons ou un agent hydrolysant choisi dans l'un du groupe consistant en l'eau, des acides de Lewis et des bases de Lewis.

3. Procédé suivant les revendications 1 et 2, dans lequel le cocatalyseur ou activateur est hydrolysé en une quantité telle que l'équation suivante soit satisfaite :
HA/OM est égal à environ 1,5 (A - 0,08)
dans laquelle A représente le rapport molaire du composé organométallique à la teneur totale en métal du cocatalyseur ou de l'activateur formé initialement qui comprendra à la fois le cocatalyseur ou l'activateur et le composé organométallique à partir duquel le cocatalyseur ou l'activateur a été formé et HA représente le nombre de moles d'un agent hydrolysant ou modificateur et OM représente le nombre de moles du composé organométallique restant dans le cocatalyseur ou l'activateur après sa formation initiale.

4. Procédé suivant la revendication 3, dans lequel le rapport molaire de l'agent hydrolysant au composé organométallique restant après la formation initiale de l'activateur est compris dans l'intervalle d'environ 0,07 à environ 0,5, dans lequel l'agent hydrolysant est l'eau et le composé organométallique est un composé contenant de l'aluminium, et dans lequel le rapport molaire de l'eau au composé contenant de l'aluminium restant après la formation initiale de l'alumoxane est compris dans l'intervalle d'environ 0,07 à 0,3.

5. Procédé suivant l'une quelconque des revendications précédentes, dans lequel le rapport molaire du composé organométallique aux sites actifs de surface du support poreux est compris dans l'intervalle de 0,5 : 1 à 2,5 : 1 et est de préférence un rapport molaire inférieur ou égal à 1 : 1.

6. Procédé pour la polymérisation d'oléfines seules ou en association avec une ou plusieurs autres oléfines, ledit procédé comprenant la polymérisation en présence du système de catalyseur fixé sur un support suivant l'une quelconque des revendications précédentes.

7. Système de catalyseur suivant l'une quelconque des revendications 1 à 5, comprenant :
(i) un noyau, ledit noyau comprenant une proportion dominante d'un support poreux, et un métallocène ; et
(ii) un revêtement, ledit revêtement couvrant substantiellement ledit noyau, et ledit revêtement comprenant une proportion dominante d'un activateur pour ledit métallocène.
